# NEUE EUROPÄISCHE PATENTSCHRIFT

(11) **EP 0 626 401 B2**
(45) Veröffentlichungstag und Bekanntmachung des Hinweises auf die Entscheidung über den Einspruch: **23.10.2002**
(45) Hinweis auf die Patenterteilung: 05.11.1997
(21) Anmeldenummer: 94107969.1
(22) Anmeldetag: 25.05.1994
(51) Int. Cl.: C08G 18/79

(54) **Wässrige Bindemittelzusammensetzung, diese enthaltende Überzugsmittel und deren Verwendung**
Aqueous binder composition, coating containing and their use
Composition aqueuse de liant, revêtement la contenant et leur application

(30) Priorität: 28.05.1993 DE 4317791
(43) Veröffentlichungstag der Anmeldung: 30.11.1994
(73) Patentinhaber: E.I. DU PONT DE NEMOURS AND COMPANY, Wilmington Delaware 19898 (US)
(72) Erfinder: Duecoffre, Volker, D-42119 Wuppertal (DE); Flosbach, Carmen, Dr., D-42115 Wuppertal (DE); Schubert, Walter, Dr., D-42349 Wuppertal (DE)
(74) Vertreter: Gille Hrabal Struck Neidlein Prop Roos

(56) Entgegenhaltungen:
- EP-A- 0 269 469
- US-A- 4 554 185
- US-A- 4 920 162
- US-A- 5 200 489
- DATABASE WPI Week 7638, Derwent Publications Ltd., London, GB; AN 76-71385X & JP-A-51 089 596 (TOA PAINT LTD)

## Beschreibung

Die Erfindung betrifft eine für wäßrige Überzugsmittel geeignete zweikomponenten-Bindemittelzusammensetzung mit unverkappten hydrophobisierten Polyisocyanaten als Vernetzer, die zur Herstellung von Basis-, Klar- und Decklacküberzügen, Füllerschichten und Grundierungen, insbesondere bei der Herstellung von Mehrschichtlackierungen auf dem Kraftfahrzeugsektor geeignet ist.

Es ist bekannt Polyisocyanate mit freien NCO-Gruppen in nicht-wäßrigen Systemen einzusetzen. So beschreibt die JP-Patentveröffentlichung J 74/142.836 Polyisocyanatkomponenten, die durch Umsetzung von Polyisocyanaten mit H-aktiven, aliphatischen Kohlenwasserstoffen erhalten werden, als in organischen Lösemitteln gelöste Systeme. In der JP-Patentveröffentlichung 75/014967 werden flüssige Polyisocyanate beschrieben, die ebenfalls mit H-aktiven, aliphatischen Kohlenwasserstoffen mit mehr als fünf C-Atomen modifiziert sind. Sie werden für die Härtung ölmodifizierter Alkydharze verwendet.

In den letzten Jahren wurde versucht, unverkappte Polyisocyanatverbindungen im wäßrigen Medium einzusetzen. So werden in der EP-A-0 358 979, DE-A-4 101 696, DE-A-3 529 249 und der DE-A-3 829 587 wäßrige Dispersionen von Polyhydroxyacrylatharzen beschrieben, in die beliebige "Lackpolyisocyanate" einemulgierbar sind. Die US-A-4 020 216 beschreibt ein wasserverdünnbares Gemisch aus Acrylat- und Polyesterharz, das mit einem unmodifizierten, aliphatischen Polyisocyanat gehärtet wird. Die DE-A-4 101 527 beschreibt eine wäßrige Dispersion eines hydroxyfunktionellen Polyesterharzes in das beliebige Polyisocyanate einemulgiert werden können.

In den EP-A-0 206 059, EP-A-0 061 628, EP-A-0 310 345 und EP-A-0 019 844 werden Emulgatoren für Polyisocyanate beschrieben, die Umsetzungsprodukte von Polyisocyanaten mit hydrophilen Polyalkylenether-Alkoholen darstellen. Die wäßrigen Polyisocyanatemulsionen dienen als Härter für wäßrige Klebstoffe bzw. Formkörper.

Den beschriebenen Veröffentlichungen ist gemein, daß die eingesetzten Polyisocyanate entweder unmodifiziert oder hydrophil modifiziert eingesetzt werden.

Aufgabe der Erfindung ist es, Polyisocyanate enthaltende wäßrige Bindemittelzusammensetzungen bereitzustellen, die beim Vermischen der Einzelkomponenten in wäßriger Phase eine günstige Stabilität aufweisen, d.h. bei denen unerwünschte Nebenreaktionen der Polyisocyanate mit Wasser weitgehend reduziert sind.

Es hat sich gezeigt, daß diese Aufgabe überraschenderweise gelöst werden kann wenn im Gegensatz zum Stand der Technik, der in waßrigen Systemen mit; hydrophilen Isocyanaten arbeitet, erfindungsgemäß mit hydrophoben Verbindungen modifizierte Polyisocyanate bereitgestellt werden. Es hat sich im Rahmen der Erfindung gezeigt, daß die hydrophobisierten Polyisocyanatvernetzer in wäßrigen Polyolemulsionen ein sehr rasches Diffundieren der Polyisocyanate in die organische Harzmatrix der wäßrigen Emulsion erlauben. Diese Diffusion in die Harzmatrix gewährt eine intensive Vermischung von Bindemittel und Vernetzer, so daß während der Filmbildung, nach Abdunsten von Wasser und Cosolventien, homogene Flächen entstehen, wodurch lacktechnische Eigenschaften wie Endhärte, Fülle, Glanzgrad, Chemikalien-beständigkeiten deutlich verbessert werden.

Einen Gegenstand der Erfindung bildet daher eine wäßrige Zweikomponenten-Bindemittelzusammensetzung, die enthält:
A) 70 - 30 Gew.-% einer oder mehrerer wasserverdünnbarer, oligomerer oder polymerer Polyolverbindungen, mit einer Hydroxylzahl von 30 - 250, einer Säurezahl von 0 - 50 mg KOH/g oder einer Aminzahl von 0 - 50 mg KOH/g, und einem Zahlenmittel des Molekulargewichts von 500 - 10000,
B) 30 - 70 Gew.-% eines oder mehrerer Polyisocyanate mit freien NCO-Gruppen als Vernetzer, mit einer mittleren NCO-Funktionalität von 1,8 bis 3,5 und einem mittleren Gehalt an hydrophoben Gruppen von 0,1 bis 1.
C) 0 bis 20 Gew.-% eines oder mehrerer Aminoplastharze und/oder Phenoplastharze und
D) 0 bis 40 Gew.-% eines oder mehrerer verkappter Polyisocyanate,
wobei sich die Summe der Gew.-% der Komponenten A), B), C) und D) auf 100 Gew.-% addiert.

Die Zusammensetzung enthält Wasser, sowie gegebenenfalls ein oder mehrere organische Lösemittel, bevorzugt bis zu 20 Gew.-%.

Die hydrophoben Gruppen der Polyisocyanate der Komponente B) haben die allgemeine Formel

- NH - CO - X - R

worin
X die Bedeutung von - 0 - oder - NR¹ - hat, und
R C₆ - C₃₀ - Alkyl bedeutet,
R¹ Wasserstoff oder C₁ - C₇ - Alkyl
oder 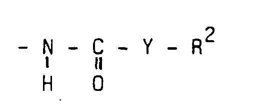 ist,
worin
Y = 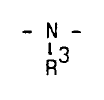
oder
- S -
R³ = H oder - CH₃
R² = 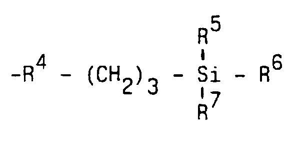
R⁴ = 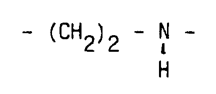 oder 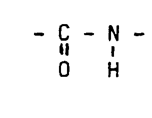 und
R⁵, R⁶, R⁷, die gleich oder verschieden sein können
   - OCH₃,
   - OC₂H₅ oder
   - (OC₂H₄)₂OCH₃
sind,
oder worin einer oder zwei der Reste R⁵, R⁶ und R⁷ Methyl bedeutet und die anderen eine der vorstehenden Bedeutungen haben.

Bevorzugte Polyisocyanate sind solche der allgemeinen Formel 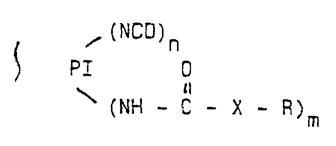 worin
n = 1,8 - 3,5
m = 0,1 - 1
PI = Polyisocyanatgrundkörper,
und X und R wie vorstehend definiert sind,
oder die Komponente B) stellt ein oder mehrere Polyisocyanate mit mindestens zwei freien NCO-Gruppen dar, bei denen es sich um Umsetzungsprodukte eines oder mehrerer Di-, Tri- oder Polyisocyanate mit Polysiloxanen der folgenden allgemeinen Formel handelt: 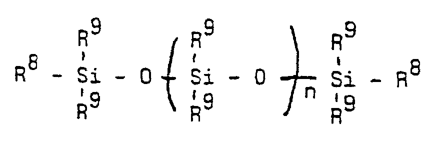 worin
R⁹ gleich oder verschieden sein können und Alkylreste mit 1 - 6 C-Atomen oder Phenyl darstellen können
R⁸ gleich oder verschieden sein können und
   - Alk - OH
   - Alk - (OAlk')p - OH oder 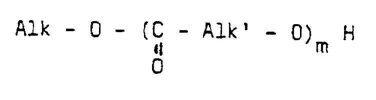
   bedeuten
wobei Alk und Alk' Alkylengruppen mit 1 - 6 C-Atomen sind und mehrere in einem Molekül enthaltene Alkylengruppen gleich oder verschieden sein können,
n = 8 bis 40
m = 2 bis 30
p = 1 bis 20.

Die erfindungsgemäßen wäßrigen Bindemittelzusammensetzungen können zu wäßrigen Überzugsmitteln verarbeitet werden, die neben der Bindemittelzusammensetzung ein oder mehrere organische Lösemittel, sowie gegebenenfalls Pigmente und/oder Füllstoffe und/oder lackübliche Zusatzstoffe enthalten.

Die Komponente A) stellt eine oligomere oder polymere Polyolverbindung (Polyolharz) dar, deren Zahlenmittel des Molekulargewichts (Mn) (bestimmt mittels Gelchromatographie; Polystyrolstandard), im Bereich von 500 bis 10000, vorzugsweise 1000 bis 5000 liegt. Als Oligomere/Polymere kommen dabei Polymerisate, Polykondensate oder Polyadditionsverbindungen in Betracht. Die Hydroxylzahl beträgt 30 bis 250, vorzugsweise 45 bis 200 und insbesondere 50 bis 180 mg KOH/g. Diese OH-gruppenhaltigen Verbindungen können gegebenenfalls noch andere funktionelle Gruppen enthalten, wie Carboxylgruppen oder Aminogruppen.

Beispiele für derartige Polyole sind Polyetherpolyole, Polyacetalpolyole, Polyesteramidpolyole, Polyamidpolyole, Epoxidharzpolyole oder deren Umsetzungsprodukte mit CO₂, Phenolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polycarbonatpolyole, Polyesterpolyole oder (Meth)acrylatharzpolyole. Der Ausdruck (Meth)acryl bedeutet hier Acryl und/oder Methacryl. Bevorzugt sind Polyetherpolyole, Polyesterpolyole, Poly(meth) acrylatharze und Polyurethanpolyole, wie:
a) Polyester-Polyole oder Polyether-Polyole, jeweils mit einem Zahlenmittel des Molekulargewichts Mn von 500 bis 10000.
b) hydroxylgruppenhaltige Poly(meth)acrylate oder Poly(meth)acrylamide auf der Basis von (Meth)acrylsäurehydroxyalkylestem mit 2 bis 12 Kohlenstoffatomen im Alkylteil oder (Meth)acrylsäure-hydroxyalkylamiden mit 2 bis 12 Kohlenstoffatomen im Alkylteil, gegebenenfalls copolymerisiert mit alpha,beta-ungesättigten Monomeren, mit einem Zahlenmittel des Molekulargewichts Mn von 1000 bis 10000, oder
c) hydroxylgruppenhaltige Poly(meth)acrylate auf der Basis von (Meth)acrylsäurehydroxyalkylestern mit 2 bis 12 Kohlenstoffatomen im Alkylteil und gegebenenfalls copolymerisierbaren alpha,beta-ungesättigten Monomeren, die mit cyclischen Estern von Hydroxycarbonsäuren mit 4 bis 6 Kohlenstoffatomen modifiziert sind, mit einem Zahlenmittel des Molekulargewichts Mn von 1000 bis 10000, oder
d) hydroxylfunktionelle Polyesteroligomer-Polyacrylate mit einem Zahlenmittel des Molekulargewichts von 1000-10000 oder
e) hydroxylgruppenhaltige Polyurethan- und/oder Polyharnstoffharze mit einem Zahlenmittel des Molekulargewichts von 1000 - 10000.

Die Polyole a) - e) können auch in Mischung eingesetzt werden.

Beispiele für Polyetherpolyole der Komponente a) sind solche mit einem Zahlenmittel des Molekulargewichts Mn von 500 bis 10000.

Spezielle Beispiele sind Umsetzungsprodukte von Di- oder Triolen, wie Propandiol, Butandiol oder Glycerin, mit Ethylenoxid oder Propylenoxid.

Die hydroxyfunktionellen Polyester a) können nach üblichen Methoden (vgl. z.B. B. Vollmert, Grundriß der makromolekularen Chemie, E. Vollmert-Verlag Karlsruhe 1982, Band II, Seite 5 ff.) aufgebaut werden, z.B. aus aliphatischen und/oder cycloaliphatischen Di-, Tri- oder höherwertigen Alkoholen, gegebenenfalls zusammen mit einwertigen Alkoholen und aus aromatischen, aliphatischen und/oder cycloaliphatischen Carbonsäuren sowie höherwertigen Polycarbonsäuren. Beispiele für geeignete Alkohole sind Methanol, Ethanol, Butanol, Isobutanol, Ethylenglykol, 1,2-Propandiol, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylethan, Trimethylolpropan, Pentaerythrit, Veretherungsprodukte von Diolen und Polyolen, z.B. Diund Triethylenglykol, Polyethylenglykol, Neopentylglykolester von Hydroxypivalinsäure.

Beispiele für geeignete Carbonsäuren sind Essigsäure, Propionsäure, Laurylsäure, Benzoesäure, Dimethylolpropionsäure, Adipin-, Azelain-, Tetrahydrophthal-, Hexahydrophthal-, Endomethyltetrahydrophthalsäure, 1,3- und 1,4-Cyclohexandicarbonsäure, Isophthalsäure, o-Phthalsäure, Terephthalsäure und/oder deren Anhydride, sowie deren veresterungsfähige Derivate.

Beispiele für hydroxylgruppenhaltige Poly(meth)acrylate b) auf der Basis von (Meth)Acrylsäurehydroxyalkylestern mit 2 bis 12 Kohlenstoffatomen im Alkylteil sind Copolymere von Hydroxylalkylestern der Acrylsäure oder Methacrylsäure mit Alkoholen mit mindestens zwei Hydroxylgruppen, wie 1,4-Butandiol-mono(meth)acrylat, 1,6-Hexandiol-mono (meth)acrylat oder 1,2,3-Propantriol-mono(meth)acrylat. Beispiele für hydroxylgruppenhaltige Poly(meth)acrylamide b) auf der Basis von (Meth)Acrylsäurehydroxyalkylamiden sind Amide der Acrylsäure oder Methacrylsäure mit Hydroxyalkylaminen oder Di(hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid.

Die hydroxylgruppenhaltigen Poly(meth)acrylate der Komponente b) können Homo- oder Copolymerisate sein. Sie weisen z.B. ein Zahlenmittel des Molekulargewichts von 1000 bis 10000, bevorzugt von 3000 bis 6000 auf. Copolymerisierbare Monomere zur Herstellung der Copolymerisate sind alpha,beta-ungesättigte Monomere, radikalisch polymerisierbare Monomere aus der Gruppe der Ester von alpha,beta-ungesättigten Carbonsäuren, wie Acrylsäure oder Methacrylsäure, wobei Beispiele für die Alkoholkomponente Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, alpha-Methylstyrol und Vinyltoluol. Weitere Beispiele sind Vinylester kurzkettiger Carbonsäuren, wie Vinylacetat, Vinylpropionat und Vinylbutyrat.

Ebenfalls möglich ist die Copolymerisation von (Meth)acrylsäure, wodurch Carboxyfunktionen ins Harz eingebaut werden. Natürlich ist es auch möglich, Monomere mit tert.-Aminogruppen wie z.B. Dimethylaminoethylmethacrylat oder Dimethylaminopropylmethacrylat einzupolymerisieren.

Die hydroxylgruppenhaltigen Poly(meth)acrylate der vorstehend definierten Komponente c) können modifizierte Poly(meth)acrylat-homo- und -copolymere sein, wie sie unter b) beschrieben werden, deren Hydroxylgruppen ganz oder partiell mit cyclischen Estern, wie z.B. von Hydroxycarbonsäure mit 4 bis 6 Kohlenstoffatomen, wie Butyrolacton oder Caprolacton umgesetzt sein können. Die erhaltenen modifizierten Poly(meth)acrylate der Komponente c) weisen bevorzugt ein Zahlenmittel des Molekulargewichts Mn von 1000 bis 10000 auf.

Die hydroxylgruppenhaltigen Polyesteroligomer-Polyacrylate der vorstehend definierten Komponente d) sind beispielsweise erhältlich durch radikalische Polymerisation von 50 bis 95 Gew.-% eines oder mehrerer Ester ungesättigter Carbonsäuren mit hydrophoben und hydrophilen Anteilen, wobei
I) die hydrophoben Anteile auf monomeren Estern ungesättigter Carbonsäuren mit sekundären OH-Gruppen basieren, die im Gemisch mit OH-Gruppen-freien Comonomeren vorliegen können und
II) die hydrophilen Anteile auf monomeren Estern ungesättigter Carbonsäuren mit primären OH-Gruppen und ungesättigten Monomeren mit COOH-Gruppen basieren, die im Gemisch mit OH-Gruppen-freien Comonomeren vorliegen können, wobei das Zahlenverhältnis von aus den Komponenten II und I stammenden primären zu sekundären OH-Gruppen im Copolymeren 1 : 1,5 bis 1 : 2,5 beträgt, in
5 bis 50 Gew.-% eines oder mehrerer hydroxyfunktioneller Polyesteroligomerer, erhältlich durch Polykondensation von Diolen und/oder Polyolen und Dicarbonsäuren und/oder deren Derivaten, gegebenenfalls unter Mitverwendung von einem oder mehreren Monoalkoholen und/oder Monocarbonsäuren, mit einem errechneten Molekulargewicht von 200 bis 1000, vorzugsweise von 300 bis 600, einer Hydroxylzahl von 100 bis 600, bevorzugt 200 bis 500, und einer Säurezahl von 0 bis 15, bevorzugt 0 - 1,5, wobei die Monomeren I und II in derartigen Mengen eingesetzt werden, daß das erhaltene Polyesteroligomer-Polyacrylat eine Hydroxylzahl von 30 bis 250, eine Säurezahl von 0 bis 50, bevorzugt 20 bis 30 und einem Zahlenmittel des Molekulargewichts (Mn) von 1000 bis 10000, bevorzugt 2000 bis 5000, aufweist (Gew.-% beziehen sich jeweils auf den Festkörpergehalt und addieren sich auf 100 Gew.-%).

Das Polyesteroligomer-Polyacrylat kann durch Polymerisation der Komponenten I und II in dem Polyesteroligomeren hergestellt werden. Beispielsweise kann man so vorgehen, daß 5 bis 80 Gewichtsteile (bezogen auf den Festkörper von d) mindestens eines hydroxyfunktionellen Polyesteroligomeren, wie vorstehend definiert, vorgelegt werden und darin 95 bis 20 Gewichtsteile (bezogen auf den Festkörper von d) von Estern ungesättigter Carbonsäuren mit hydrophoben und hydrophilen Anteilen, basierend auf den vorstehend definierten Komponenten I und II darin polymerisiert werden. Dabei addieren sich die Gewichtsteile der Ester ungesättigter Carbonsäuren und der hydroxyfunktionellen Polyesteroligomeren jeweils auf 100 Gewichtsteile. Die Mengenanteile der Komponenten II und I werden so gewählt, daß das Zahlenverhältnis von primären zu sekundären OH-Gruppen im erhaltenen Copolymeren (ohne Berücksichtigung der OH-Gruppen des Polyesteroligomeren) 1 : 1,5 bis 1 : 2,5 beträgt.

Der hydrophobe Anteil I der Komponente d) wird durch Copolymerisation von einem oder mehreren Estern ungesättigter Carbonsäuren mit einer Alkoholkomponente, die noch mindestens eine sekundäre Hydroxylgruppe enthält, in Gegenwart eines Polyesteroligomeren erhalten. Beispiele für die ungesättigte Carbonsäure der ungesättigten Estermonomeren sind (Meth)acrylsäure (unter (Meth)acryl bzw. (meth)acryl wird hier und im Folgenden Methacryl und/oder Acryl bzw. methacryl und/oder acryl verstanden), Maleinsäure und Crotonsäure. Die Alkoholkomponente der Estermonomeren auf der Basis ungesättigter Carbonsäuren enthält bevorzugt 3 bis 25 Kohlenstoffatome. Sie kann auf kurzkettigen aliphatischen Alkoholen, langkettigen aliphatischen Alkoholen sowie auf Kondensationsprodukten von Alkoholen oder Glycidylverbindungen mit Fettsäuren basieren.

Die Copolymeren der Komponente d) werden im Folgenden zur Vereinfachung auch als Acrylcopolymere bezeichnet. Sie basieren jedoch nur bevorzugt auf Monomeren auf der Basis von Estern der (Meth)acrylsäure; der vereinfachende Ausdruck schließt die Ester anderer, ungesättigter Carbonsäuren, wie vorstehend definiert, ein.

Beispiele für die hydrophoben Monomeren mit sekundären OH-Funktionen sind:
Hydroxypropyl(meth)acrylat, Addukte aus Glycidyl(meth)acrylat und gesättigten kurzkettigen Fettsäuren mit C₁ - C₃ Alkylresten, z.B. Essigsäure oder Propionsäure, sowie Addukte aus Cardura E (Glycidylester der Versaticsäure) mit ungesättigten COOH-funktionellen Verbindungen, wie z.B. Acryl- bzw. Methacrylsäure, Maleinsäure, Crotonsäure, Addukte aus Cardura E mit ungesättigten Anhydriden wie z.B. Maleinsäureanhydrid, Umsetzungsprodukte aus Glycidyl (meth)acrylat mit gesättigten verzweigten oder unverzweigten Fettsäuren mit C₄ - C₂₀ -Alkylresten, z.B. Butansäure, Capronsäure, Laurinsäure, Palmitinsäure, Stearinsäure.

Der hydrophile Anteil II) der Komponente d) wird aus Monomeren auf der Basis von Estern ungesättigter Carbonsäuren, wie (Meth)acrylsäure, Maleinsäure und Crotonsäure mit mindestens einer primären OH-Gruppe im Alkoholteil hergestellt. Die Alkoholkomponente der ungesättigten Estermonomeren kann beispielsweise 2 bis 18 Kohlenstoffatome aufweisen.

Beispiele für die Monomeren zum Aufbau des hydrophilen Anteils der Komponente d) sind:
Hydroxyalkylester der Acrylsäure und/oder Methacrylsäure mit einer primären OH-Gruppe und einem C₂ - C₃ -Hydroxyalkylrest wie Hydroxyethyl(meth)acrylat, sowie Hydroxyalkylester der Acrylsäure und/oder Methacrylsäure mit einer primären OH-Gruppe und einem C₄- C₁₈-Hydroxyalkylrest wie z.B. Butandiolmonoacrylat, Hydroxyhexylacrylat, Hydroxyoctylacrylat und die entsprechenden Methacrylate und Umsetzungsprodukte von Hydroxyethyl(meth)arylat mit Caprolacton.

Die hydrophilen Anteile der Komponente d) enthalten auch Carboxylgruppen, zu deren Einführung bei der Herstellung der Komponente d) ein oder mehrere carboxylfunktionalisierte Monomere mitverwendet werden, wie z.B. ungesättigte Mono- und Dicarbonsäuren, z.B. Acrylsäure, Methacrylsäure und Crotonsäure. Weitere verwendbare carboxylfunktionalisierte Monomere sind ungesättigte Anhydride wie Maleinsäureanhydrid, sowie Halbester von Dicarbonsäuren, wie z.B. Maleinsäureanhydrid durch Anlagerung von gesättigten aliphatischen Alkoholen wie z.B. Ethanol, Propanol, Butanol und/oder Isobutanol.

Bei der Herstellung der Komponente d) können weitere Comonomere mitverwendet werden, die frei von OH-Gruppen sind. Beispiele hierfür sind langkettige, verzweigte oder unverzweigte ungesättigte Monomere, wie Alkyl(meth)acrylate mit C₈-C₁₈-Ketten im Alkylteil, z.B. Ethylhexyl(meth)acrylat, Octyl(meth)acrylat, 3,5,5-Trimethylhexyl(meth) acrylat, Decyl(meth)acrylat, Dodecyl(meth)acrylat, Hexadecyl(meth)acrylat, Octadecyl(meth)acrylat, Laurylacrylat, Isobornyl(meth)acrylat, 4-Tertiärbutylcyclohexylmethacrylat. Weitere Beispiele sind kurz- und mittelkettige, verzweigte oder unverzweigte ungesättigte Monomere, wie Alkyl(meth)acrylate mit C₁ - C₇ -Ketten im Alkylteil, z.B. Methyl(meth) acrylat, Ethyl(meth)acrylat, Propyl(meth)acrylat, Butyl(meth)acrylat, lsobutyl(meth)acrylat, Tertiärbutyl(meth)acrylat, Pentyl(meth)acrylat, Hexyl(meth)acrylat, Cyclohexyl(meth)acrylat. Ebenfalls möglich ist die Verwendung von Di- oder Triacrylaten wie z.B. Hexandioldiacrylat-1,6 oder Trimethylolpropantriacrylat. Da dann das Polymere verzweigt, muß gegebenenfalls ein Regler wie z.B. Mercaptoethanol zugefügt werden. Es können auch aromatische Vnylverbindungen, wie Styrol und Styrolderivate, wie Vinyltoluol und p-Methylstyrol als Comonomere mitverwendet werden.

Die weiteren Comonomeren können z.B. in solchen Mengenanteilen verwendet werden, daß die gewünschten Spezifikationen von z.B. Molmasse, OH-Gruppenverhältnis, OH-Zahl und Säurezahl erzielt werden.

Wie erwähnt, erfolgt die Herstellung des Polyesteroligomer-Polyacrylats d) durch Copolymerisation der Komponenten I) und II) in Gegenwart eines Polyesteroligomeren. Es handelt sich um eine radikalische Copolymerisation, bei der die Mengen der Monomeren und Polyesteroligomeren so abgestimmt werden, daß die gewünschten Spezifikationen bezüglich Molmasse, OH-Gruppenverhältnis, OH-Zahl und Säurezahl erzielt werden.

Die Herstellung erfolgt beispielsweise als radikalische Lösungspolymerisation in Anwesenheit eines Polyesteroligomeren und eines Radikalinitiators, wie sie dem Fachmann bekannt ist. Beispiele für Radikalinitiatoren sind Dialkylperoxide, wie Di-tert.-Butylperoxid, Di-cumylperoxid: Diacylperoxide, wie Di-benzoylperoxid, Dilaurylperoxid; Hydroperoxide, wie Cumolhydroperoxid, tert.-Butylhydroperoxid; Perester, wie tert.-Butylperbenzoat, tert.-Butyl-perpivalat, tert.-Butyl-per-3,5,5-trimethylhexanoat, tert.-Butyl-per-2-ethylhexanoat; Peroxiddicarbonate, wie Di-2-ethylhexylperoxydicarbonat, Dicyclohexylperoxydicarbonat; Perketale, wie 1,1-Bis-(tert.-Butylperoxy)3,5,5-trimethylcyclohexan, 11-Bis-(tert.-Butylperoxy)cyclohexan; Ketonperoxide, wie Cyclohexanperoxid, Methylisobutylketonperoxid und AzoVerbindungen, wie 2,2'-Azo-bis(2,4-dimethyl-valeronitril), 2,2'-Azo-bis(2-methylbutyronitril), 1,1'-Azo-bis-cyclohexancarbonitril, Azo-bis-isobutyronitril.

Die Polymerisationsinitiatoren werden im allgemeinen beispielsweise in einer Menge von 0,1 bis 4 Gew.-%, bezogen auf die Monomeren-Einwaage, zugesetzt.

Die radikalische Polymerisation kann im Eintopfverfahren unter Erzielung einer statistischen Verteilung von hydrophoben und hydrophilen Anteilen durchgeführt werden.

Es kann z.B. so gearbeitet werden, daß alle notwendigen Monomeren sowie der oder die Initiatoren in einem Vorratsgefäß gemischt werden; anschließend wird über einen Zeitraum von z.B. 5 Stunden in ein z.B. 140°C heißes Gemisch aus einem oder mehreren Lösemitteln und Polyesteroligomeren oder Polyesteroligomeren allein unter Rühren zudosiert. Die hierbei entstehenden Copolymeren besitzen dann eine statische Verteilung der primären und sekundären Hydroxy- sowie Carboxyfunktionen.

Es ist jedoch auch möglich, eine Blockpolymerisation zur Erzielung von Copolymerisaten mit hydrophoben und hydrophilen Blöcken durchzuführen. Zur Herstellung der Blockcopolymerisate kann in üblicher Arbeitsweise vorgegangen werden. Es können beispielsweise zunächst Gemische aus hydrophoben Monomeren (gegebenenfalls zusammen mit weiteren Comonomeren) polymerisiert werden, worauf dann hydrophile Monomere (gegebenenfalls mit Comonomeren) zudosiert und weiter polymerisiert werden. In der Praxis ist es beispielsweise möglich, zuerst ein Gemisch aus hydrophoben, hydroxyfunktionellen Monomeren, (Meth)acrylsäureestern sowie gegebenenfalls z.B. Vinylaromaten zuzudosieren und anschließend ein weiteres Gemisch aus hydrophilen, hydroxyfunktionellen Monomeren, (Meth)acrylsäureestern, Vinylaromaten und COOH-funktionellen Monomeren zuzudosieren. Die hierbei entstehenden Copolymeren besitzen dann ein hydrophobes und ein hydrophiles Kettenende, wodurch z.B. diesen Copolymeren ein Emulgatorcharakter zukommen kann.

Natürlich ist es auch möglich, die einzelnen Monomeren separat und gegebenenfalls auch zeitversetzt zuzudosieren.

Durch die Copolymerisation der Komponenten I und II in Gegenwart von Polyesteroligomeren, bei der Herstellung der Komponente d) kann die Menge der eingesetzten und später gegebenenfalls abzudestillierenden Lösemittel stark reduziert werden. Es ist sogar möglich, Lösemittel völlig zu vermeiden und allein die Polyesteroligomeren als Lösemittel für die Herstellung der Komponente d) zu verwenden.

Die bei der Herstellung der Komponente d) verwendeten Polyesteroligomeren können z.B. aus einem oder mehreren Diolen und/oder Polyolen, gegebenenfalls in Anwesenheit von einem oder mehreren Monoalkoholen, durch Kondensation mit einer oder mehreren Dicarbonsäuren und/oder deren Derivaten hergestellt werden. Die Polykondensation erfolgt nach üblichen, dem Fachmann geläufigen Verfahren, beispielsweise in Gegenwart von üblichen Veresterungskatalysatoren und beispielsweise bei erhöhten Temperaturen von z.B. 180 bis 230°C in der Schmelze.

Beispiele für verwendbare Polyole sind solche mit mehr als zwei OH-Gruppen, wie aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit.

Ebenfalls möglich ist es, einen oder mehrere monofunktionelle Alkohole, wie z.B. Monoalkanole mit verzweigten oder unverzweigten Alkylresten, mit beispielsweise 1 bis 20 C-Atomen miteinzusetzen. Beispiele hierfür sind Methanol, Ethanol, Propanol, Isopropanol, Laurylalkohol und Stearylalkohol.

Beispiele für die Dicarbonsäuren sind aliphatische gesättigte und ungesättigte Dicarbonsäuren, wie z.B. Maleinsäure, Fumarsäure, Bernsteinsäure, Adipinsäure, Azelainsäure, Sebacinsäure; cycloaliphatische gesättigte und ungesättigte Dicarbonsäuren und aromatische Dicarbonsäuren, wie Phthalsäure, Isophthalsäure, Tetra-, Hexa-, Endomethylentetrahydrophthalsäure, Endoethylentetrahydrophthalsäure und Cyclohexandicarbonsäure (1,2; 1,3 und 1,4), Itaconsäure, Muconsäure und Camphersäure oder gegebenenfalls deren mögliche Anhydride.

Ebenfalls möglich ist die Mitverwendung von monofunktionellen Carbonsäuren, wie z. B. Essigsäure, Propionsäure, Benzoesäure, Laurylsäure oder Stearylsäure.

Beispiele für verwendbare Diole sind aliphatische Diole, wie z.B. Ethylenglykol, Propylenglykol-(1,3 und 1,2), Butandiol, Hexandiol-(1,6), Neopentylglykol, 2-Butyl-2-ethyl-propandiol-1,3; Polyetherglykole des Ethylens und Propylens mit bis zu 6 Monomerbausteinen, wie Diethylenglykol, Triethylenglykol, Tetraethylenglykol und Hexaethylenglykol: und cycloaliphatische Diole, wie 1,3-Dimethylolcyclohexan und 1,4-Dimethylolcyclohexan.

Beispiele für Polyurethanpolyole der vorher definierten Komponente e) ergeben sich aus der Umsetzung von Diund Polyisocyanaten mit einem Überschuß an Di- und/oder Polyolen. Geeignete Isocyanate sind z.B. aliphatische, cycloaliphatische und aromatische Isocyanate, wie Hexamethylendiisocyanat, Isophorondiisocyanat, Toluylendiisocyanat, sowie auch Isocyanate, gebildet aus drei Molen eines Diisocyanats wie Hexamethylendiisocyanat oder Isophorondiisocyanat, und Biurete, die aus der Reaktion von drei Molen eines Diisocyanates mit einem Mol Wasser hervorgehen. Geeignete Polyharnstoffpolyole können in ähnlicher Weise durch Umsetzen von Di- und Polyisocyanaten mit äquimolaren Mengen von Aminoalkoholen, z.B. Ethanolamin oder Diethanolamin, erhalten werden.

Die Komponente A) kann frei von Lösemitteln sein oder aber Restlösemittel von ihrer Herstellung enthalten.

Beispiele für derartige Lösemittel sind organische Lösemittel, insbesondere lackübliche Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole.

Die beschriebenen hydroxylfunktionellen Harze sind wasserverdünnbar. Sie können als Emulsionen, Dispersionen oder echte bzw. kolloidale Lösungen vorliegen.

Die Wasserverdünnbarkeit kann z.B. durch Salzbildung oder mit Hilfe eines externen Emulgators erhalten werden.

Carboxylgruppenhaltige Polymere können durch Neutralisation mit Basen, wie z.B. NH₃ oder Trietylamin, aminfunktionelle durch Neutralisation mit Säuren wie z.B. Ameisensäure oder Essigsäure wasserverdünnbar gemacht werden.

Bei der Herstellung carboxylgruppenhaltiger Harze der Komponente A) können die Carboxylgruppen direkt durch Verwendung carboxylgruppenhaltiger Bausteine beim Aufbau der Harze, beispielsweise beim Aufbau von Polymeren, wie (Meth)acrylcopolymeren, eingeführt werden.

Beispiele für geeignete carboxylgruppenhaltige Monomere sind ungesättigte Carbonsäuren, wie z.B. Acryl-, Methacryl-, Itacon-, Croton-, Isocroton-, Aconit-, Malein- und Fumarsäure, Halbester der Malein- und Fumarsäure sowie β-Carboxyethylacrylat und Addukte von Hydrocyalkylestern der Acrylsäure und/oder Methacrylsäure mit Carbonsäureanhydriden, wie z.B. der Phthalsäure-mono-2-methacryloyloxyethylester.

Bei der Herstellung der carboxylgruppenhaltigen Harze ist es aber auch möglich, zunächst ein hydroxy- und gegebenenfalls carboxylgruppenhaltiges Polymer mit einer OH-Zahl von 15 bis 200 mg KOH/g aufzubauen und die Carboxylgruppen ganz oder teilweise in einer zweiten Stufe durch Umsetzen der Hydroxyl- und gegebenenfalls carboxylgruppenhaltigen Polymeren mit Carbonsäureanhydriden einzuführen.

Für die Addition an die hydroxylgruppenhaltigen Polymeren geeignete Carbonsäureanhydride sind die Anhydride von aliphatischen, cycloaliphatischen und aromatischen gesättigten und/oder ungesättigten Di- und Polycarbonsäuren, wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyrromellithsäure sowie deren halogenierte und alkylierte Derivate.

Bevorzugt eingesetzt werden Anhydride der Maleinsäure, Phthalsäure, Tetrahydro- und Hexahydrophthalsäure sowie 5-Methylhexahydrophthalsäureanhydrid.

Zur Bereitung der wäßrigen Emulsionen können übliche Verfahren angewendet werden, die dem Fachmann geläufig sind. So können verschiedene Harze der Komponente A) beispielsweise miteinander vermischt, neutralisiert und emulgiert werden.

In der Praxis kann beispielsweise so vorgegangen werden, daß ein lösemittelhaltiges carboxylfunktionelles Harz gegebenenfalls weitgehend von Lösemitteln befreit wird, bevorzugt durch Destillation unter vermindertem Druck. Anschließend wird das Harz mit Basen teilweise oder ganz neutralisiert. Es können hierzu lackübliche Basen verwendet werden, wie Ammoniak oder tertiäre Amine, z.B. Triethylamin, Dimethylethanolamin oder Triethanolamin. Diese Neutralisation kann beispielsweise durch langsames Zulaufen von Basen während beispielsweise über 5 min. erfolgen.

Anschließend wird beispielsweise in das warme Harzgemisch vollentsalztes Wasser, z.B. in 60 bis 90 Minuten, eindosiert, beispielsweise unter intensivem Mischem. Die Herstellung der Dispersion kann dabei durch Erwärmen der Wasserphase unterstützt werden. Als Mischaggregate sind beispielsweise schnellaufende Rührer oder Rotor/Stator-Mischer geeignet. Es ist auch möglich, das Dispersionsergebnis durch Hochdruck- oder Ultraschall-Homogenisatoren zu verbessern. Das Verfahren kann kontinuierlich oder diskontinuierlich geführt werden. Man erhält eine wäßrige Ölin-Wasser-Emulsion, die lagerstabil ist und mit Wasser ohne Probleme auf geringere, zur Applikation geeignete Festkörpergehalte eingestellt werden kann. Additive, wie Pigmente, Füllstoffe und andere Zusätze können je nach Bedarf während der Herstellung der Emulsionen und/oder nach deren Herstellung zugesetzt werden.

Ebenfalls möglich ist es, das carboxylfunktionelle Harz teilweise oder vollständig mit Basen zu neutralisieren und anschließend mit so viel Wasser zu emulgieren, daß eine Wasser-in-Öl-Emulsion entsteht. Die Wasser-in-Öl-Emulsion kann anschließend gelagert, dann jeweils zur Herstellung des Überzugsmittels (Lackherstellung) mit Additiven und Vernetzern gemischt und mit Wasser oder Lösemittel-Wasser-Gemischen auf die entsprechende Applikationsviskosität eingestellt werden. Dieses Verfahren hat den Vorteil, daß hierbei Additive und Vernetzer in die Harzphase und nicht, wie manchmal unerwünscht, in die wäßrige Phase gelangen. Aminfunktionalisierte Harze werden mit Säuren ganz oder teilweise neutralisiert, wobei wie oben verfahren wird.

Die Komponente A) kann auch gegebenenfalls mit geringen Lösemittelanteilen zusammen mit externen Emulgatoren in die Wasserphase überführt werden. Bei den Lösungsmitteln handelt es sich bevorzugt um solche, die mit Wasser mischbar sind. Die Lösungsmittelmenge kann beispielsweise bis zu 20 Gew.-%, bevorzugt bis zu 10 Gew.-%, bezogen auf die fertige wäßrige Zusammensetzung, betragen. Als Emulgatoren können ionische oder nichtionische, bevorzugt nichtionische Emulgatoren, eingesetzt werden. Der Gehalt an Emulgator kann beispielsweise bei 0,5 bis 30 Gew.-%, bevorzugt zwischen 1,5 und 15 Gew.-%, bezogen auf den Festkörperanteil der Komponente A) im fertigen wäßrigen Überzugsmittel, liegen.

Zur Bereitung der wäßrigen Dispersionen können übliche Verfahren angewendet werden, die dem Fachmann geläufig sind. So können beispielsweise die lösemittelhaltigen Formen der Komponenten A) weitgehend von Lösemitteln befreit werden, bevorzugt durch Destillation unter vermindertem Druck, worauf bevorzugt in die noch warmen, dünnviskosen Harze bzw. Harzmischungen der Emulgator eindispergiert werden kann und dann diese Mischung zu der Wasserphase gefügt werden kann, beispielsweise unter intensivem Mischen. Die Herstellung der Dispersion kann dabei durch Erwärmen der Wasserphase unterstützt werden. Als Mischaggregate sind beispielsweise schnellaufende Rührer oder Rotor/Stator-Mischer geeignet. Es ist auch möglich, das Dispersionsergebnis durch Hochdruck- oder Ultraschall-Homogenisatoren zu verbessern.

Das Verfahren kann kontinuierlich oder diskontinuierlich geführt werden. Die entstehenden Dispersionen können auch zu diesem Zeitpunkt miteinander gemischt werden. Man erhält eine wäßrige Öl-in-Wasser-Dispersion, die lagerstabil ist und mit Wasser ohne Probleme auf geringere, zur Applikation geeignete Festkörpergehalte eingestellt werden kann. Die erfindungsgemäß erhaltenen wäßrigen Dispersionen können beispielsweise einen Festkörperbereich von 25 - 55 Gew.-%, bezogen auf die fertige Dispersion, aufweisen. Zur Applikation können sie gegebenenfalls mit Wasser, z.B. auf eine geeignete Spritzviskosität verdünnt werden.

Als Emulgatoren sind handelsübliche ionische oder nicht-ionische Emulgatoren geeignet. Es können beispielsweise Umsetzungsprodukte von Alkylphenolen mit Alkylenoxiden oder Umsetzungsprodukte von Sorbitanfettsäureestern mit Alkylenoxiden, z.B. C₁ - C₁₂-Alkylphenolethoxylate, verwendet werden.

Die erfindungsgemäßen Überzugsmittel enthalten als Komponente B) hydrophobisierte Polyisocyanate, die durch Einführung einer oder mehrerer hydrophober Gruppen in geeignete Polyisocyanate herstellbar sind.

Beispiele für derartige erfindungsgemäß modifizierbare Isocyanate sind aliphatische, cycloaliphatische oder aromatische Polyisocyanate, wie Tetramethylendiiscyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan(=lsophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'diisocyanat, 3,2'- und/oder 3,4-Diisocyanato-4-methyl-diphenylmethan, Naphthylen-1,5-diisocyanat, Triphenylmethan-4,4'-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate. Weitere Beispiele sind die eingangs aufgeführten siliziumhaltige Gruppen und siloxanhaltige Gruppen aufweisenden Isocyanate.

Besonders gut für die Erfindung geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxylpolyester, Hydroxypolyether und/oder hydroxylgruppenhaltigen Acrylatharze verwendet.

Ebenfalls möglich ist die Verwendung von Copolymeren des vinylisch ungesättigten Monoisocyanats Dimethyl-misopropenylbenzylisocyanat, wie sie unter anderem in DE-A-41 37 615 beschrieben sind.

Ebenfalls geeignet sind Polyisocyanate, die hydrophil modifiziert sind, wie sie in EP 19844, EP 61628, EP 310 345 und EP 540 985 beschrieben sind, da hier der Vernetzer einen Emulgatorcharakter erhält.

In diesen bekannten Prepolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800-4000 aufweisen.

Die Hydrophobierung der Polyisocyanate erfolgt beispielsweise durch Umsetzung mit monofunktionellen hydrophoben Alkoholen oder Aminen. Beispiele für solche Alkohole und Amine sind verzweigte oder unverzweigte Fettalkohole und Fettamine mit C₆ - C₃₀ im Alkylteil wie z.B. Laurylalkohol, Laurylamin oder Palmitoyl-, und Stearylalkohol.

Sie werden in einer solchen Menge eingesetzt, daß im Mittel 0,1 bis 1 NCO-Gruppen im Polyisocyanat umgesetzt werden.

Die Umsetzung der Polyisocyanate kann z.B. durch Erwärmen ein oder mehrerer Polyisocyanate mit dem Hydrophobisierungsmittel erfolgen. Beispielsweise können ein oder mehrere Polyisocyanate vorgelegt und unter Rühren erhitzt werden, z.B. auf etwa 80°C, und das Hydrophobisierungsmittel (beispielsweise während etwa 10 min.) zudosiert werden. Es wird solange gerührt, bis die zu erwartende NCO-Zahl erreicht ist. Es ist auch möglich, ein oder mehrere Polyisocyanate mit einem Gemisch aus zwei oder mehreren Hydrophobisierungsmitteln zu versehen.

Die Umsetzung kann lösemittelfrei oder in Gegenwart geeigneter Lösemittel erfolgen. Geeignete Lösemittel sind z.B. solche, die nicht mit Polyisocyanaten reagieren. Beispiele für solche Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester und Ether.

Die erfindungsgemäßen Bindemittelzusammensetzungen sowie die erfindungsgemäßen Überzugsmittel können weitere Vernetzer (Komponente C) enthalten, wie Aminoplastharze und Phenoplastharze.

Es können beispielsweise die auf dem Lacksektor als Vernetzungsmittel üblichen Aminoplastharze verwendet werden. Zu geeigneten Aminoplastharzen zählen beispielsweise alkylierte Kondensate, die durch Umsetzung von Aminotriazinen und Amidotriazinen mit Aldehyden hergestellt werden. Zu deren Herstellung werden nach bekannten technischen Verfahren Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd kondensiert. Die Reaktivität derartiger Aminharze wird bestimmt durch den Kondensationsgrad, das Verhältnis der Amin- bzw. Amid-Komponente zum Formaldehyd und durch die Art des verwendeten Veretherungsalkohols.

Weitere Beispiele für übliche Vernetzerharze im vorstehenden genannten Sinn sind teilweise oder vollständig veretherte Amin-Formaldehyd-Kondensationsharze und/oder teilweise oder vollständig veretherte Phenol-Formaldehyd-Kondensationsharze. Derartige Vernetzerharze können mit den Polyolverbindungen vor der Neutralisation in der organischen Phase oder in der neutralisierten wäßrigen Dispersion vermischt werden: das Vermischen erfolgt bevorzugt bei Raumtemperatur oder auch durch kurzzeitiges Erhitzen beispielsweise bis auf 150°C, bevorzugt bis zu 90°C.

Im folgenden werden Beispiele für derartige Vernetzer angegeben: AminFormaldehyd-Kondensationsharze, die beispielsweise durch Reaktion von Aldehyyden mit Harnstoff, N-Alkylharnstoff, Glykoluril, Dicyandiamid, verschiedenen Triazinen, wie Melamin, Benzoguanamin und Acetoguanamin oder ihren Mischungen entstehen. Die Aldehyde können dabei monofunktionell, aber auch polyfunktionell sein. Beispiele hierfür sind Formaldehyd und seine Polymerisationsprodukte, wie Paraformaldehyd, Polyoxymethylen, Trioxan oder aliphatische und cyclische Aldehyde, wie Glyoxal, Acetaldehyd, Acrolein, Propionaldehyd, Butyraldehyd und Furfural. Je nach Reaktionsbedingungen (pH-Wert, Temperatur) und Methylolierungsgrad werden Harze mit verschiedenen Molmassen und unterschiedlicher Reaktivität erhalten. Die Kondensation mit Formaldehyd, Furfural, Paraformaldehyd, Polyoxymethylen oder Trioxan wird im allgemeinen unter Zusatz von schwachen Säuren oder Basen als Katalysator ausgeführt. Starke Säuren werden beispielsweise verwendet bei Kondensation mit Acrolein, Glyoxal, Acetaldehyd, Propionaldehyd oder Butyraldehyd. Hierbei wird das primäre Reaktionsprodukt neutralisiert, dann Aldehyd zugesetzt und unter Zusatz von schwachen Säuren oder Basen weiter reagiert. Der bevorzugte Aldehyd ist Formaldehyd.

Die Alkoholgruppen, bevorzugt Methylolgruppen, der Aldehyd-Kondensationsprodukte werden teilweise oder bevorzugt vollständig mit Alkoholen verethert. Es werden solche Amin-Formaldehydharze bevorzugt, deren Hauptmenge an Methylolgruppen mit Monoalkoholen oder deren Gemischen umgesetzt ist. Besonders bevorzugt werden Methanol, Ethanol, Butanol, Heptanol, Benzylalkohol und andere aromatische Alkohole, cyclische Alkohole, sowie Ethoxyethanol oder Butoxyethanol. Sollen Alkohole mit mehr als 4 C-Atomen eingebaut werden, so wird die Methylolgruppe erst mit einem niedrigeren Alkohol verethert und anschließend der höhere Alkohol durch Umetherung eingeführt. Die bevorzugten Alkohole sind niedere aliphatische Monoalkohole, wie Methanol und/oder Butanol und seine Isomeren. Besonders bevorzugt werden Melaminharze, die mit 3 bis 6 Molen Formaldehyd umgesetzt und anschließend vollständig mit Methanol verethert sind. Die Harze werden nach dem Stand der Technik hergestellt und von vielen Firmen als Verkaufsprodukte angeboten. Bei Veretherung mit Hydroxycarbonsäuren wie Hydroxybenzoesäure, Slicylsäure oder Dimethylolpropionsäure entstehen carboxylgruppenhaltige, bei Verwendung von Hydroxy-alkyl(meth)acrylaten oder Allylalkohol ungesättigte Melaminharztypen. Es können auch übliche carbamylmethylierte Melaminharze eingesetzt werden, die durch Reaktion von alkoxymethylierten Melaminharzen mit Alkylcarbamaten unter schwach sauren Bedingungen hergestellt werden.

Solche Kondensate sind beispielsweise beschrieben in Ullmann "Encyclopedia of Industrial Chemistry", 5. Auflage, Vol. A2, Kapitel "Aminoresins", Seiten 115 - 141 (1985) und Houben-Weyl, "Methoden der Organischen Chemie", Band 14/2, Seiten 319 - 388 (1962).

Die Aminoplastharze können wasserverdünnbar oder nicht wasserverdünnbar sein. Beispiele für nicht wasserverdünnbare Aminharzvernetzer sind in Wasser unlösliche butanol- oder isobutanolveretherte Melaminharze wie z.B. die Handelsprodukte Setamin US 138 oder Maprenal MF 610, mischveretherte Melaminharze, die sowohl butanol- als auch methanolverethert sind, wie z.B. Cymel 254, sowie Hexamethyloxymethylmelaminharze wie z.B. Cymel 301 oder Cymel 303, wobei letztere zur Vernetzung einen externen Säurekatalysator wie z.B. p-Toluolsulfonsäure benötigen können.

Beispiele für wasserverdünnbare Aminharzvernetzer sind übliche hydrophile und damit wasserlösliche bzw. -verträgliche Melaminharze, wie z.B. methyl-veretherte Melaminharze wie z.B. Cymel 325, Cymel 327, Cymel 350, Cymel 370, Maprenal MF 927. Setamin, Maprenal und Cymel sind eingetragene Warenzeichen.

Beispiele für bevorzugte Phenolharze, die als Vernetzer dienen können, sind Reaktionsprodukte von Phenol oder substituierten Phenolen mit verschiedenen Aldehyden im molaren Überschuß in Gegenwart alkalischer Katalysatoren (Resol-Typ). Beispiele für phenolische Verbindungen sind Phenol, Kresol, Xylenol, Resorcin und substituierte Phenole wie p-tert-Butyphenol, p-tert-Amylphenol, p-Phenyl-phenol, Isothymol, Cardanol oder auch mehrkernige Phenole wie Dihydroxy-diphenylpropan (Bisphenol A) oder Dihydroxy-diphenylmethan (Bisphenol F). Als Ausgangsmaterial dienen auch phenolische Novolakharze, die gegebenenfalls mit Monocarbonsäuren, bevorzugt alpha-verzweigten Monocarbonsäuren, Monophenolen, die besonders mit C2- bis C18-Alklgruppen substituiert sind oder auch Monoepoxiden wie alpha-Monoepoxidalkane, Monoglyceridether oder Monoglyceridester, defunktionalisiert werden. Als Aldehyde finden beispielsweise Verwendung Formaldehyd und seine Polymerisationsprodukte wie Paraformaldehyd, Trioxymethylen, Polyformaldehyd oder auch Hexamethylentetramin. Gut geeignet sind Acetaldehyd, Paraldehyd und Metaldehyd, sowie Butyraldehyd oder Furfural. Die Methylolgruppen werden teilweise oder bevorzugt vollständig verethert mit Methanol, Ethanol, Propanol und/oder Butanol. Bevorzugt werden Harze, die pro phenolischer OH-Gruppe mit überschüssigem Formaldehyd, d.h. etwa 1,1 bis 2,5 Mol Formaldehyd in alkalischem Medium umgesetzt werden. Harze auf Basis Bisphenol A, die mit etwa 4 Formaldehyd-Molekülen umgesetzt und vollständig mit Butanol verethert sind, werden besonders bevorzugt. Es können sowohl wasserunlösliche, wie auch carboxylgruppenhaltige Phenolharze verschiedener Molmassen verwendet werden. Hierfür geeignete Phenolcarbonsäuren sind beispielsweise 4,4-Bis(4-hydroxyphenyl)pentansäure, Glykolsäurederivate von Bis-phenolen, wie das 2-(4-Hydroxyphenyl)-2(carbethoxyphenyl)-propan, oder Salicylsäure. Gegebenenfalls können auch sehr niedrigmolekulare, gegebenenfalls ungesättigte, Methylolphenolether eingesetzt werden, wie Trimethylolphenolallylether z.B. Methylonharze (eingetragenes Warenzeichen).

Die erfindungsgemäßen Bindemittelzusammensetzungen und Überzugsmittel können als weitere Vernetzer auch verkappte Polyisocyanate, die auch blockierte Polyisocyanate genannt werden, als Komponente D) enthalten. Derartige Polyisocyanate schließen Diisocyanate ein. Als verkappte Isocyanate können beliebige Di- und/oder Polyisocyanate verwendet werden, bei denen die Isocyanatgruppen mit einer Verbindung umgesetzt worden sind, die aktiven Wasserstoff enthält. Die verkappten Polyisocyanate reagieren bei erhöhter Temperatur, in der Regel zwischen etwa 90 bis 220°C mit den Filmbildnern. Blockierte Di- und/oder Polyisocyanate werden z.B. dadurch hergestellt, daß man ein multifunktionelles Isocyanat mindestens mit einer stöchiometrischen Menge an einer monofunktionellen, aktiven Wasserstoff (Zerewitinoff-Reaktion) enthaltenden Verbindung beispielsweise bei Temperaturen von 50 bis 80°C umsetzt, wobei gegebenenfalls übliche Katalysatoren, wie basische Katalysatoren, wie tertiäre Amine und/oder geringe Mengen an Zinnsalzen, wie Dibutylzinndilaurat, zugegeben werden können. Als Di- und/oder Polyisocyanate können entsprechende isocyanatgruppenhaltige Prepolymere verwendet werden. Die organischen Polyisocyanate weisen bevorzugt eine mittlere Molmasse von 112 bis 5000, besonders bevorzugt 140 bis 1000, und zweckmäßig eine mittlere Isocyanatfunktionalität von 2 bis 8 auf. Geeignete Polyisocyanate sind beispielsweise Verbindungen der idealisierten Formel

E (N = C = O)ₛ (V)

in welcher E für einen aromatischen, gegebenenfalls mit einem oder mehreren Alkylgruppen substituierten oder Methylenbrücken aufweisenden Kohlenwasserstoffrest mit insgesamt 6 bis 15 Kohlenstoffatomen, einen aliphatischen Kohlenwasserstoffrest mit 2 bis 18, vorzugsweise 6 bis 10 Kohlenstoffatomen, einen cyclischen Kohlenwasserstoffrest mit 6 bis 15 Kohlenstoffatomen oder einen heterocyclischen Ring und s für eine Zahl von 2 bis 5, vorzugsweise 2 bis 3, steht.

Typische Beispiele für derartige Polyisocyanate sind Propylendiisocyanat, Ethylethylendiisocyanat, Dimethylethylendiisocyanat, Trimethylendiisocyanat, Pentamethylendiisocyanat, Hexamethylendiisocyanat, Trimethylhexandiisocyanat, 1,12-Dodecandiisocyanat, 1,18-Octadecandiisocyanat, Cyclopentandiisocyanat, Cyclohexan-1,3- und 1,4-diisocyanat, sowie beliebige Gemische dieser Isomeren, Methylcyclohexandiisocyanat, m- oder p-Tetramethylxylylendiisocyanat, 1-Isocyanato-3,3,5-trimethyl-5-isocyanatomethyl-cyclohexan (=Isophorondiisocyanat, IPDI), Perhydro-2,4'-und/oder 4,4'-diphenylmethandiisocyanat, 1,3-und 1,4-Phenylendiisocyanat, 2,4- und 2,6-Toluylendiisocyanat sowie beliebige Gemische dieser isomeren, Xylylendiisocyanat, Diphenylmethan-2,4'-und/oder -4,4'-diisocyanat, 3,2'und/oder 3,4'-Diisocyanato-4-methyldiphenylmethan, Bisphenyldiisocyanat, Naphthylen-1,5-diisocyanat, Triphenylmethan-4,4',4"-triisocyanat, 2,2',4,4'-Tetraisocyanato-5,5'-dimethyltriphenylmethan, Diphenyltetraisocyanat oder Naphthyltetraisocyanat. Gemischt aliphatische/aromatische Verbindungen sind auch geeignet. Besonders bevorzugt werden großtechnisch erzeugte Diisocyanate wie Toluylendiisocyanat, Hexandiisocyanat, Isophorondiisocyanat oder Dicyclohexylmethandiisocyanat. Außer den beispielhaft genannten, niedermolekularen Polyisocyanaten können auch die in der Polyurethanchemie bekannten höhermolekularen Isocyanat-Polymere auf Basis urethangruppenfreier Polyisocyanate und höhermolekularer Polyhydroxyverbindungen als Polyisocyanatkomponente eingesetzt werden. Zweckmäßig werden hierbei (n + 1) Mol der oben beschriebenen Diisocyanate mit n Mol einer gegenüber Isocyanat reaktiven difunktionellen Verbindung bei Temperaturen von zweckmäßig 50 bis 120°C in der Schmelze oder in Gegenwart inerter Lösemittel umgesetzt, die sowohl niedrigmolekular als auch hochmolekular mit einer Molmasse von 62 bis 5000, bevorzugt 90 bis 1000, sein können. Arbeitet man mit einem Überschuß an Diisocyanat, so muß das überschüssige Isocyanat wieder abdestilliert werden. Als niedermolekulare Dialkohole werden zweckmäßig die verschiedenen Isomere von linearen, verzweigten und cyclischen Kohlenstoffverbindungen mit 2 bis 20 Kohlenstoffatomen und zwei sekundären und/oder primären Hydroxylgruppen verstanden. Typische Beispiele hierfür sind Butandiol-1,4, Hexandiol-1,6, Trimethylhexandiol, Bis/hydroxymethyl)cyclohexan, Neopentyylglykol, Hydroxypivalinsäureneopentylglykolester, N-Methyl-diethanolamin oder Bisethoxyliertes Bisphenol A. Geeignete höhermolekulare Polyhydroxylverbindungen sind die aus der Polyurethanchemie bekannten Polyesterdiole, Polycaprolactondiole, Polycaprolactamdiole, Polycarbonatdiole, Polyurethandiole und Polyglykoletherdiole. Ebenso sind entsprechende polymere Polyole mit mehr als zwei Hydroxygruppen im Molekül geeignet. Verwendet werden können auch langkettige primäre und sekundäre Diamine, wie Hexandiamin-1,6, Addukte von 2 Mol Glycidylether oder Glycidylester an Hexandiamin, N,N'-Cyanethylethylendiamin oder Bis-N,N'-Cyanethylpolyoxypropylendiamin.

Als Potyisocyanate sind besonders gut die sogenannten "Lackpolyisocyanate" geeignet, die aus bekannten Diisocyanaten hergestellt werden. So entsteht aus Hexandiisocyanat und Wasser das Tris-(6-isocyanatohexyl)-biuret. Durch Trimerisation von Hexandiisocyanat erhält man Tris-(6-isocyanatohexyl)isocyanurat, gegebenenfalls im Gemisch mit seinen höheren Homologen, sowie weiteren aus Isophorondiisocyanat, Diisocyanatotoluol oder Gemischen aus Diisocyanatotoluol und Hexamethylendiisocyanat aufgebauten Isocyanuratgruppen aufweisenden Polyisocyanaten. Sehr gut einsetzbare Polyisocyanate sind auch die Urethangruppen aufweisenden Polyisocyanate, die beispielsweise durch Umsetzung von überschüssigen Mengen an 2,4-Diisocyanatotoluol mit einfachen, mehrwertigen Alkoholen der Molmasse 62 bis 300, insbesondere Trimethylolpropan und gegebenenfalls destillative Entfernung des nicht umgesetzten Diisocyanatüberschusses erhalten werden können. So werden beispielsweise blockierte Triisocyanate oder blockierte höhermolekulare Reaktionsprodukte von Triisocyanaten mit Dialkoholen besonders bevorzugt. Bei dieser Umsetzung werden zweckmäßig ungefähr folgende Molverhältnisse eingehalten:
Triisocyanat: Diol: Schutzgruppe wie y : (y - 1) : (y + 2), wobei y = 1 bis 6, bevorzugt 2 bis 3 ist.

Mittel, die die Isocyanate blockieren, enthalten beispielsweise nur eine einzige Amin-, Amid-, imid-, Lactam-, Thio-, Hydroxyl- oder CH-acide Gruppe. Im allgemeinen werden flüchtige, aktiven Wasserstoff enthaltende Verbindungen mit niedrigen Molmassen, vorzugsweise von nicht mehr als 300, bevorzugt von nicht mehr als 200, verwendet. So haben sich beispielsweise bewährt: aliphatische oder cycloaliphatische Alkohole, wie n-Butanol, Isopropanol, tert.-Butanol, Furfurol, 2-Ethylhexanol, Cyclohexanol, Phenole, Kresol, tertiär-Butylphenole, Dialkylaminoalkohole wie Dimethylaminoethanol, Oxime wie Methylethylketoxim, Acetonoxim, Cyclohexanonoxim, Acetophenonoxim, Lactame wie epsilon-Caprolactam oder Pyrrolidon-2, Imide wie Phthalimid oder N-Hydroxy-maleinimid, Hydroxalkylester, Hydroxamsäuren und deren Ester, N-Alkylamide, wie methylacetamid, Imidazole, wie 2-Methylimidazol, beta-Diketone, wie Acetylaceton, Malonsäuredialkylester oder Acetessigsäurealkylester.

Es werden aber auch beta-Hydroxyglykole oder -glykolether und Glykolamide empfohlen. Oxime und Lactame sind als Verkappungsmittel von besonderem Interesse, weil die damit verkappten Polisocyanate bei relativ niedrigen Temperaturen reagieren. Zur Blockierung können auch mehr als eine Art von Schutzgruppe, bevorzugt solche mit unterschiedlicher Reaktivität verwendet werden. Es ist so beispielsweise möglich, ein Gemisch von zwei oder mehreren unterschiedlich blockierten Polyisocyanaten zu verwenden oder ein Polyisocyanat einzusetzen, das intramolekular mit zwei oder mehreren unterschiedlichen Schutzgruppen blockiert ist. Der Vorteil der Verwendung von zwei oder mehreren unterschiedlichen Polyisocyanaten und/oder zwei oder mehreren unterschiedlichen Verkappungsmitteln liegt darin, daß hiermit die Vernetzung über einen weiten Temperaturbereich erfolgen kann. Die zu vernetzenden Überzugsfilme (Lackfilm) sind somit auch über einen längeren Zeitraum nur teilvernetzt, wodurch die Abgabe von Wasser, Colösemitteln bzw. Verkappungsmitteln sehr lange möglich ist, ohne die Oberflächen zu beeinträchtigen.

Bei den erfindungsgemäßen Bindemittelzusammensetzungen handelt es sich um sogenannte Zweikomponenten-Systeme. Dies bedeutet, daß die Komponenten A) und B) getrennt gelagert werden und erst vor der Anwendung bzw zur Anwendung beispielsweise zur Herstellung von Überzugsmitteln vermischt werden. Die Komponenten A) können zur Lagerung gegebenenfalls mit den Komponenten C) und D) vermischt sein. Die erfindungsgemäßen Bindemittelzusammensetzungen können in üblicher Weise zu Überzugsmitteln, beispielsweise Lacken formuliert werden. Dies erfolgt im allgemeinen durch Zusatz von Wasser und/oder Lösemitteln. Dabei ist es möglich, eine Mischung der Komponenten A), die auch die Komponente B) enthält, zu bereiten und diese in üblicher Weise durch den Zusatz von Wasser und/oder Lösemitteln und üblichen Additiven zu Überzugsmitteln aufzuarbeiten. Es besteht jedoch auch die Möglichkeit, zunächst eine der Komponenten A) oder B) durch Zusatz von Wasser und/oder Lösemitteln und üblichen Additiven aufzubereiten und dann die andere Komponente zuzusetzen.

Geeignete organische Lösemittel für die Herstellung von Überzugsmitteln, beispielsweise Lacken, sind solche, wie sie auch bei der Herstellung der Einzelkomponenten A), B), C) und D) verwendet werden. Beispiele für derartige Lösemittel sind organische Lösemittel, insbesondere lackübliche Lösemittel, wie aliphatische und aromatische Kohlenwasserstoffe, beispielsweise Toluol, Xylol, Gemische aliphatischer und/oder aromatischer Kohlenwasserstoffe, Ester, Ether und gegebenenfalls Alkohole.

Zur Herstellung der Überzugsmittel können den erfindungsgemäß eingesetzten Vernetzungs- und Bindemittelkomponenten gegebenenfalls übliche lacktechnische Additive zugesetzt werden, wie z.B. Antikratermittel, Antischaummittel, Verlaufsmittel, Antiabsetzmittel, Viskositätsregler, UV-Stabilisatoren oder Haftvermittler. über die Menge der Additive können die Applikations- und Verfilmungseigenschaften beeinflußt werden.

Es können gegebenenfalls auch bekannte Pigmente und/oder Füllstoffe in das Überzugsmittel eingearbeitet werden. Die Verfahren, z.B. Dispergieren oder Vermahlen, sind in der Literatur schon häufig beschrieben. Als Pigmente sind die üblichen Pigmente für Klar- oder Decklacke geeignet, beispielsweise Ruß, Titandioxid, feindisperses Siliciumdioxid, Aluminiumsilikat, Talkum, organische und anorganische Farbpigmente, transparente Farbstoffe, Metalleffekt-Pigmente oder vernetzte Polymer-Mikroteilchen. Je nach Auswahl der Pigmente können Grundierungen, Füller, Metalleffektlacke, Decklacke, farbige Decklacke oder Klarlacke hergestellt werden.

Die erfindungsgemäßen Überzugsmittel können neben Wasser Cosolventien enthalten. Diese dienen zur Einstellung der Viskosität bei der Applikation, zur Beeinflussung des Verlaufs sowie um bestimmte Lackeffekte zu erzielen. Beispiele für solche Lösemittel sind aromatische Kohlenwasserstoffe, z.B. Xylole, aliphatische Kohlenwasserstoffe, z. B. n-Hexan oder Cyclohexan, Ketone, wie z.B. Aceton, Methylisopropylketon, Ester, wie z.B. Butylacetat oder Ethylacetat, Ether, wie z.B. Methoxypropanol oder Butoxypropanol. Es können aber auch Alkohole, wie z.B. Isopropanol, Hexanol oder Ethylglykol eingesetzt werden. Über den Siedepunkt oder das unterschiedliche Lösevermögen der Colöser können Applikations- und Verlaufseigenschaften beeinflußt werden. Die zugesetzte Colösermenge hängt somit von den gewünschten Eigenschaften, insbesondere Viskositätseigenschaften, der Überzugsmittel ab. Bei Verwendung von Wasser als Lösemittel entstehen echte Lösungen, Emulsionen oder Dispersionen.

Wasserhaltige Überzugsmittel besitzen einen besonders geringen Gehalt an flüchtigen organischen Bestandteilen.

Die aus den erfindungsgemäßen Bindemitteln hergestellten Überzugsmittel können auf die gewünschte Applikationsviskosität durch entsprechende Regelung des Zusatzes von Wasser und/oder Additiven eingestellt werden.

Die Vernetzung kann gegebenenfalls katalysiert werden. Hierzu sind lackübliche Katalysatoren geeignet, wie beispielsweise Dibutylzinndilaurat oder geeignete Wismutverbindungen.

Die Komponenten A) und B) werden bevorzugt in solchen Mengen eingesetzt, daß das Verhältnis von OH-Gruppen der Komponenten A) zu NCO-Gruppen der Komponenten B) bei 0,5 : 1 bis 2 : 1 liegt.

Sofern zusätzlich mit Aminoplastharzen, Phenoplastharzen und/oder blockierten Polyisocyanaten vernetzt wird, kann entsprechend der eingesetzten stöchiometrischen Menge die Menge der Komponente B) verringert werden.

Die Applikation der so hergestellten Überzugsmittel kann in üblicher Weise erfolgen, beispielsweise durch Tauchen, Spritzen, Streichen oder auf elektrostatischem Wege.

Die Aushärtung von aus den Überzugsmitteln erstellten Überzügen kann in einem weiten Temperaturbereich von beispielsweise +5°C bis 180°C erfolgen. Bevorzugt ist der Temperaturbereich von 20°C bis 80°C, beispielsweise Raumtemperatur, im Falle der Verwendung von Aminoplastharzen und Phenoplastharzen, wie beispielsweise Melaminharzen, und/oder blockierten Isocyanaten, bevorzugt 80°C - 150°C.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall. Die Überzugsmittel können auch im Mehrschichtverfahren eingesetzt werden. So können sie beispielsweise auf übliche Grundierungen, Basislacke, Füller oder auf bereits vorhandene Decklacke aufgetragen werden. Besonders geeignet sind die erfindungsgemäßen Bindemittel für Basislack-, und Decklack-, sowie Klarlackzusammensetzungen.

Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmitteln können beispielsweise Basislacke überlackiert werden, die übliche Decklackpigmente enthalten können; bevorzugt enthalten sie Effektpigmente, wie z.B. Metallic-Pigmente. Als Bindemittelbasis des Basislacks werden bevorzugt Polyester, Polyurethan- oder Acrylatharze eingesetzt. Diese Bindemittel können gegebenenfalls über Vernetzer, z.B. Melamin- oder Isocyanatderivate, vernetzt werden.

Im Folgenden werden einige Beispiele für weitere Basislacke aufgeführt, die bevorzugt mit erfindungsgemäß bereiteten pigmentfreien Klar- oder pigmenthaltigen Decklacken beschichtet werden können.

Wasserbasislacke auf der Basis von 50 bis 95 Gew.-% eines wäßrigen epoxidfunktionalisierten Emulsionspolymerisats und 95 bis 5 Gew.-% einer anionischen Polyurethandispersion mit einer Säurezahl von 5 bis 10 mg KOH/g. Als Anreibeharze für in solchen Wasserbasislacken verwendete Pigmente und Additive eignen sich besonders Poly (meth)acrylatharze (beispielsweise in einer Menge bis zu 20 Gew.-%). Beispiele für solche Wasserbasislacke sind in der DE-A-3 628 124 beschrieben.

Basislacke auf der Basis von Polyestern mit einer Glasübergangstemperatur von > 30°C, Melaminharzen (z.B. partiell butylierten Melaminharzen), Polyharnstoffplastifizierern (beispielsweise auf der Basis eines Addukts aus Butylurethan und Formaldehyd) und einem Copolymer aus Polyethylen (85 Gew.-%) - Vinylacetat (15 Gew.-%) als Wachsdispersion. Solche Basislacke können übliche Additive, wie Celluloseacetobutyrat (beispielsweise mit unterschiedlichen Molekular-Gewichtsbereichen) enthalten. Beispiele für solche Basislacke sind in der EP-A-187 379 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder Acrylharz im Gemisch mit Celluloseethern bzw. Celluloseestern und/oder Polyvinylacetaten. Ferner enthalten sind selbsthärtende Acrylharzbindemittel, die Farbpigmente enthalten und mit Isocyanat reagierende Wasserstoffatome aufweisen, sowie zusätzlich Gemische von in Lösemitteln gelösten Celluloseethern und/oder Celluloseestern und/oder Cellulosehalbestern. Solche Lacke sind z.B. in der DE-A-29 24 632 beschrieben.

Sämtliche der vorstehenden Basislackformulierungen können übliche Lackadditive enthalten, sowie übliche Füllstoffe und farbgebende Pigmente sowie auch Metallicpigmente, wie Aluminium- bzw. Edelstahlbronzen und andere Effektpigmente.

Weitere Beispiele für Basislacke sind in der DE-A-42 28 510 beschrieben.

Beispiele für Basislacke, die mit Klarlacken auf der Basis erfindungsgemäßer Überzugsmittel beschichtet werden können, sind auch Pulver-Lacke, wie sie beispielsweise in "Products Finishing", April 1976, Seiten 54 bis 56 beschrieben sind.

Die erfindungsgemäßen Überzugsmittel können auch als Basislacke, sowie auch als Füller formuliert werden. Sie eignen sich dann besonders gut zur Herstellung von Mehrschichtlackierungen, z.B. auf dem Kraftfahrzeugsektor. Zur Formulierung als Basislacke oder Füller können übliche Additive, wie sie z.B. vorstehend für Basislacke beschrieben wurden, zugesetzt werden.

Die erfindungsgemäßen Basislacke können mit üblichen Klarlacken, naß-in-naß, gegebenenfalls nach kurzer Antrocknung, überlackiert werden. Bevorzugt werden sie mit Klarlacken auf der Basis der erfindungsgemäßen Überzugsmittel überlackiert.

Die erfindungsgemäßen Überzugsmittel eignen sich besonders für Decklacke oder Klarlacke und Basislacke, die bevorzugt auf dem Kraftfahrzeugsektor, jedoch auch auf anderen Gebieten, eingesetzt werden.

Durch die günstigen Härtungsbedingungen der aus den erfindungsgemäßen Bindemitteln hergestellten Überzugsmittel sind diese besonders auch für Kraftfahrzeug-Reparaturlackierungen geeignet.

In den folgenden Beispielen beziehen sich Teile (T) und % auf das Gewicht.

### Beispiel 1

### Herstellung eines Polyesteroligomeren

336,7 g Trimethylolpropan, 366,8 Adipinsäure und 197 g Hexandiol werden mit 5 g unterphosphoriger Säure in einem mit Rührer, Abscheider, Thermometer und Rückflußkühler versehenen 2-Liter-Dreihalskolben bei 180 bis 230°C in der Schmelze auf eine Säurezahl von 20 verestert.

Anschließend wird unter Vakuum bis zu einer Säurezahl unter 1,5 kondensiert.

Das so erhaltene Produkt hat einen Einbrennrückstand von 94,5 % (1 h, 150°C), eine Viskosität von 3200 mPas (100 %ig), eine Hydroxylzahl von 460 und eine Farbzahl von 30 Hazen.

### Beispiel 2

### Herstellung eines Polyesteroligomer-Acrylatharzes

In einem 6-Liter-Vierhalskolben, der mit Rührer, Rückflußkühler, Tropftrichter und Thermometer versehen ist, werden

| | |
|---|---|
| 505,6 g | Bulyldiglykol |
| 561,8 g | Polyesteroligomer aus Beispiel 1 |
| 1421,4 g | Glycidylester der Versaticsäure (Handelsname der Shell AG "Cardura E10) |

vorgelegt und auf 144°C unter Rühren erhitzt. Anschließend wird ein Gemisch aus

| | |
|---|---|
| 196,7 g | Laurylacrylat |
| 196,7 g | Styrol |
| 393,3 g | Isobutylacrylat |
| 398,9 g | Butandiolmonoacrylat |
| 556,2 g | Acrylsäure |
| 612,4g | Isobutylmethacrylat |
| 22,5 g | Di-tertiär-butylperoxid |
| 134,9 g | Tertiärbutylperoctoat |

in einem Zeitraum von 5 Stunden zudosiert. Dann wird bei ca. 144°C noch 2 Stunden nachpolymerisiert. Das Harz hat einen Festkörper von 88,3 % (1 h 150°C), eine Säurezahl von 26 mg KOH/g und eine Viskosität von 7600 mPas.

### Beispiel 3

### Herstellung einer wäßrigen Polyesteroligomer-Acrylat -Emulsion

In einem 2-Liter-Dreihalskolben, der mit Rührer, Thermometer und Tropftrichter versehen ist, werden 634 g des in Beispiel 2 beschriebenen Polyesteroligomer-Acrylatharzes unter Rühren auf 40°C erhitzt. Anschließend wird durch Zugabe von 15,8 g Dimethylethanolamin neutralisiert. Danach werden 350, 2 g vollentsalztes Wasser unter Rühren in 30 Minuten zudosiert. Die erhaltene Emulsion hat dann einen Festkörper von 55,1 % (1 h 120°C).

### Beispiel 4a

### Herstellung eines hydrophoben Polyisocyanates

1289 T Isocyanurat des Hexamethylendiisocyanates und 211 T Dodecanol werden in einen mit Rührer, Thermometer und Rückflußkühler versehenen 2-Liter-Dreihalskolben gegeben und auf 80°C erhitzt. Es wird solange bei 80°C gerührt, bis die theoretische NCO-Zahl erreicht ist. Anschließend wird mit 375 T Solvesso 100 verdünnt.

Das erhaltene Produkt hat einen Festkörpergehalt von 80,0 % und eine NCO-Zahl von 11,1 % (bezogen auf Lösung).

### Beispiel 4b:

### Herstellung eines hydrophoben Polyisocyanates

1407,8 T Isophorondiisocyanat werden in einem mit Rührer, Thermometer, Rückflußkühler und Tropftrichter versehenen 2 L-Dreihalskolben gegeben und auf 80°C erhitzt. Innerhalb von 1,5 h werden 592,2 T eines Polysiloxans (Tegomer HSi-2111 der Firma Goldschmidt; eingetragenes Warenzeichen); OHZ = 120 mg KOH/g FH) zugetropft. Danach wird auf 100°C erhitzt und solange urethanisiert bis die theoretische NCO-Zahl erreicht ist.

Das erhaltene Produkt hat einen Festkörper von 100 % und eine NCO-Zahl von 23,8 %.

### Beispiel 5a

### Herstellung eines 2K-Wasserklarlackes

82 T der unter 3 hergestellten Polyesteroligomer-Acrylat-Emulsion werden mit 18 T Solvesso 100 versetzt.

100 T dieser Mischung werden mit 49 T der unter 4 hergestellten Polyisocyanatlösung versetzt.

Der Klarlack wird mit Hilfe einer Rakel in einer Trockenfilmschichtdicke von ca. 35 µm aufgetragen und nach einer 10-minütigen Ablüftphase bei Raumtemperatur 60 Minuten bei 80°C eingebrannt. Es resultiert ein klarer, harter Film ohne Reaktionsblasen. Im Becher beobachtet man kein Aufschäumen.

### Beispiel 5b

### Herstellung eines 2K-Wasserklarlackes

82 T der unter 3 hergestellten Polyesteroligomer-Acrylat-Emulsion werden mit 18 T Solvesso 100 versetzt.

100 T dieser Mischung werden mit 22,9 T des unter 4b hergestellten Polyisocyanates versetzt.

Der Klarlack wird mittels Rakel in einer Trockenfilmschichtdicke von ca. 35 µm appliziert, 10 Minuten bei Raumtemperatur abgelüftet und 60 Minuten bei 80°C eingebrannt. Auch hier resultiert ein klarer, harter Film ohne Reaktionsblasen. Im Becher ist kein Aufschäumen zu beobachten.

### Vergleichsbeispiel 6

### Analog Beispiel 5a) aber mit unmodifiziertem Härter

Analog Beispiel 5a) werden 100 T der unter 3 hergestellten Polyesteroligomer-Acrylat-Emulsion/Solvesso-Mischung mit 35 T einer 80 %igen Lösung des Isocyanurates des Hexamethylendiisocyanates in Solvesso 100 vermischt und unter den gleichen Bedingungen gehärtet.

Im Vergleich mit Beispiel 5a) weist der Klarlackfilm Reaktionsblasen auf und der Lack schäumt nach einiger Zeit im Becher stark auf.

## Patentansprüche

1. Wäßrige zweikomponenten-Bindemittelzusammensetzung, enthaltend
A) 70 bis 30 Gew.-% einer oder mehrerer wasserverdünnbarer oligomerer oder polymerer Polyolverbindungen, mit einer Hydroxylzahl von 30 bis 250, einer Säurezahl von 0 bis 50 mg KOH/g oder Aminzahl von 0 bis 50 mg KOH/g und einem Zahlenmittel des Molekulargewichts (Mn) von 500 bis 10000,
B) 30 bis 70 Gew.-% eines oder mehrerer Polyisocyanate mit freien NCO-Gruppen als Vernetzer, mit einer mittleren NCO-Funktionalität von 1,8 bis 3.5 und einem mittleren Gehalt an hydrophoben Gruppen von 0,1 bis 1, wobei
a) mindestens ein Polyisocyanat hydrophobe Gruppen der allgemeinen Formel
- NH - CO - X - R
hat, worin
X = -O - oder - NR¹ -,
R = C₆ - C₃₀ - Alkyl, und
R¹= H oder C₁ - C₇ - Alkyl oder 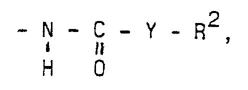 worin
Y = 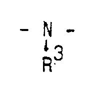
oder
- S -
R³ = H oder - CH₃
R² = 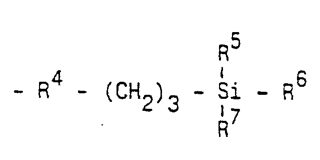
R⁴ = 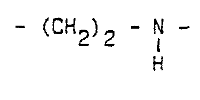 oder 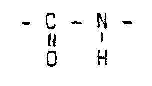 und
R⁵, R⁶, R⁷, die gleich oder verschieden sein können
- OCH₃,
- OC₂H₅ oder
- (OC₂H₄)₂ OCH₃
oder worin einer oder zwei Reste R⁵, R⁶ und R⁷ Methyl bedeutet und die anderen eine der vorstehenden Bedeutungen haben oder wobei
b) ein Polyisocyanat mindestens zwei freie NCO-Gruppen hat und das Umsetzungsprodukt eines Di-, Trioder Polyisocyanats mit Polysiloxanen der folgenden allgemeinen Formel ist: 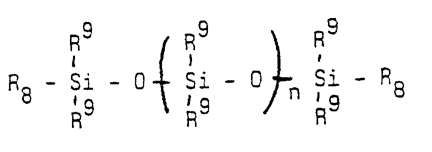
worin
R⁹ gleich oder verschieden sein können und Alkylreste mit 1 - 6 C-Atomen oder Phenylreste darstellen können
R⁸ gleich oder verschieden sein können und
- Alk - OH
- Alk - (OAlk')p - OH oder 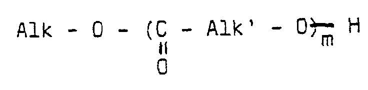
bedeuten
wobei Alk und Alk' Alkylengruppen mit 1 - 6 C-Atomen sind und mehrere in einem Molekül enthaltene Alkylengruppen gleich oder verschieden sein können,
n = 8 bis 40
m = 2 bis 30
p = 1 bis 20
C) 0 bis 20 Gew.-% eines oder mehrerer Aminoplastharze und/oder Phenoplastharze und
D) 0 bis 40 Gew.-% eines oder mehrerer verkappter Polyisocyanate,
wobei sich die Summe der Gew.-% der Komponenten A), B), C) und D) auf 100 Gew.-% addiert, sowie Wasser und gegabenenfalls ein oder mehrere organische Lösemittel.

2. Bindemittelzusammensetzung nach Anspruch 1, **dadurch gekennzeichnet, daß** die Polyolverbindung ein hydroxyfunktionelles Poly(meth)acrylat-, Polyurethan-, Polyether- Polyesterharz oder Polyesteroligomer-Polyacrylat, ist.

3. Bindemittelzusammensetzung nach Anspruch 1 oder 2 **dadurch gekennzeichnet, daß** sie in wäßriger Form mit einem Gehalt an einem oder mehreren organischen Lösemitteln von 0 - 20 Qew.-%, bezogen auf die gesamte Bindemittelzusammensetzung, vorliegt.

4. Wäßriges Überzugsmittel, enthaltend die Bindemittelzusammensetzung nach einem der Ansprüche 1 bis 3 und darüberhinaus ein oder mehrere organische Lösemittel, sowie gegebenenfalls Pigmente und/oder Füllstoffe und/oder lackübliche Zusatzstoffe.

5. Überzugsmittel nach Anspruch 4 als Klarlack, Decklack, Basislack oder Füller.

6. Verfahren zur Herstellung von Überzügen durch Auftrag eines Überzugsmittels auf ein zu lackierendes Substrat und anschließende Härtung des erhaltenen Überzugs, **dadurch gekennzeichnet, daß** man ein Überzugsmittel nach einem der Ansprüche 4 oder 5 aufbringt.

7. Verfahren zur Herstellung von Mehrschicht-Lackierungen durch Auftrag eines wäßrigen Basislackes auf ein zu lackierendes Substrat, gegebenenfalls kurzes Ablüften und Naß-in-Naß-Auftrag eines Klarlackes und anschließende gemeinsame Härtung, **dadurch gekennzeichnet, daß** man als Basislack und/oder Klarlack wäßrige Überzugsmittel nach einem der Ansprüche 4 oder 5 verwendet.

8. Verwendung der wäßrigen Bindemittelzusammensetzung nach einem der Ansprüche 1 bis 3 bei der Herstellung von Beschichtungen.

9. Verwendung nach Anspruch 8 zur Herstellung von Mehrschichtlackierungen.

10. Verwendung der wäßrigen Bindemittelzusammensetzung nach einem der Ansprüche 1 bis 3 zur Herstellung von bei Temperaturen von 5 bis 180°C härtbaren Überzugsmitteln.

11. Verwendung der Überzugsmittel nach Anspruch 4 oder 5 zur Herstellung von Kraftfahrzeug-Serien- und -Reparaturlackierungen.

12. Verwendung der Bindemittel nach Anspruch 1 bis 3 zur Herstellung von Klebstoffen.

## Claims

1. An aqueous binder vehicle two-component composition, containing
A) 70 to 30 % by weight of one or more water-thinnable oligomeric or polymeric polyol compounds with a hydroxyl number of 30 to 250, an acid number of 0 to 50 mg KOH/g or an amine number of 0 to 50 mg KOH/mg and a number average molecular weight (Mn) of 500 to 10,000,
B) 30 to 70 % by weight of one or more polyisocyanates, which contain free NCO groups, as crosslinking agents, with an average NCO functionality of 1.8 to 3.5 and an average content of hydrophobic groups of 0.1 to 1,
a) wherein at least one polyisocyanate contains hydrophobic groups of general formula
- NH - CO - X - R
where
X = - O - or - NR¹ -,
R = a C₆ - C₃₀ alkyl, and
R¹ = H or a C₁ - C₇ alkyl or 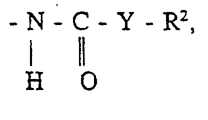
where 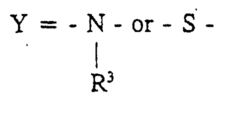
R³ = H or - CH₃ 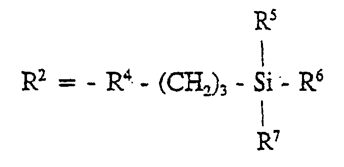 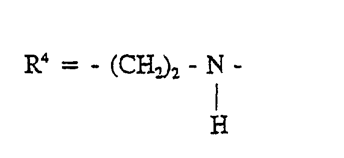
or 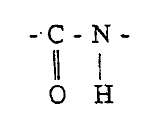 and
R⁵, R⁶ and R⁷, which may be the same or different, are
- OCH₃,
- OC₂H₅ or
- (OC₂H₄)₂ OCH₃,
or where one or two of the radicals R⁵, R⁶ and R⁷ represent methyl and the others have one of the above meanings, or wherein
b) one polyisocyanate contains at least two free NCO groups and is the reaction product of a di-, tri- or polyisocyanate with polysiloxanes of the following general formula: 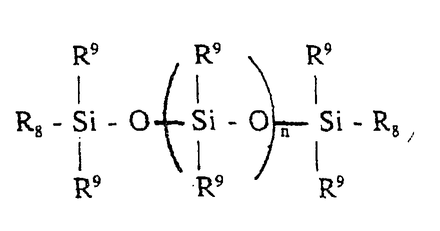
where
R⁹ may be the same or different and may represent alkyl radicals containing 1 - 6 C atoms or phenyl radicals,
R⁸ may be the same or different and represents
- Alk - OH
- Alk - (OAlk')ₚ - OH or
- 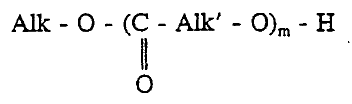
where Alk and Alk' are alkylene groups containing 1 - 6 C atoms and a plurality of alkylene groups contained in one molecule may be the same or different,
n = 8 to 40
m = 2 to 30
p = 1 to 20
C) 0 to 20 % by weight of one or more aminoplast resins and/or phenoplast resins, and
D) 0 to 40 % by weight of one or more capped polyisocyanates,
wherein the sum of the percentages by weight of components A), B), C) and D) adds up to 100 % by weight,
as well as water and optionally one or more organic solvents.

2. A binder vehicle composition according to claim 1, **characterised in that** the polyol compound is a hydroxy-functional poly(meth)acrylate, polyurethane, polyether or polyester resin or a polyester oligomer-poly acrylate.

3. A binder vehicle composition according to claim 1 or 2, **characterised in that** it exists in aqueous form with a content of one or more organic solvents of 0 - 20 % by weight with respect to the total binder vehicle composition.

4. An aqueous coating medium containing the binder vehicle composition according to any one of claims 1 to 3 and additionally containing one or more organic solvents, as well as pigments and/or extenders and/or customary lacquer additives.

5. A coating medium according to claim 4 as a clear lacquer, covering lacquer, base lacquer or primer surfacer.

6. A process for producing coatings by the application of a coating medium to a substrate to be coated and subsequent hardening of the coating obtained, **characterised in that** a coating medium according to either one of claims 4 or 5 is applied.

7. A process for producing multi-layer coatings by applying an aqueous base lacquer to a substrate to be coated, optionally with a brief ventilation step, and wet-into-wet application of a clear lacquer and subsequent joint hardening, **characterised in that** aqueous coating media according to either one of claims 4 or 5 are used as the base lacquer and/or clear lacquer.

8. The use of the aqueous binder vehicle composition according to any one of claims 1 to 3 for the production of coatings.

9. A use according to claim 8 for the production of multi-layer coatings.

10. The use of the aqueous binder vehicle composition according to any one of claims 1 to 3 for the production of coating media which can be hardened at temperatures of 5 to 180°C.

11. The use of the coating media according to claim 4 or 5 for the production of motor vehicle mass production and repair coatings.

12. The use of the binder vehicles according to claims 1 to 3 for the production of adhesives.

## Revendications

1. Composition aqueuse de liant à deux composants contenant
A) 70 à 30 % en poids d'un ou plusieurs composés polyols oligomères ou polymères, diluables dans l'eau, ayant un indice hydroxyle compris entre 30 et 250, un indice d'acide compris entre 0 et 50 mg KOH/g ou un indice d'amine compris entre 0 et 50 mg KOH/g et un poids moléculaire moyen en nombre (Mn) compris entre 500 et 10 000,
B) 30 à 70 % en poids d'un ou plusieurs polyisocyanates, comportant des groupes NCO libres, comme réticulant, ayant une fonctionnalité NCO moyenne comprise entre 1,8 et 3,5 et une teneur moyenne en groupes hydrophobes comprise entre 0,1 et 1,
a) un polyisocyanate au moins ayant des groupes hydrophobes de formule générale
- NH - CO - X - R
où
X = - O - ou - NR¹ -,
R = un alkyle ou C₆-C₃₀ et
R¹ = H ou un alkyle en C₁-C₇ ou 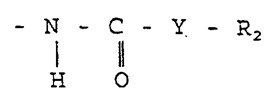 où 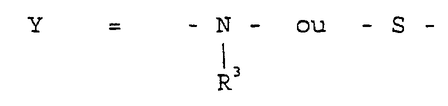
R³ = H ou - CH₃ 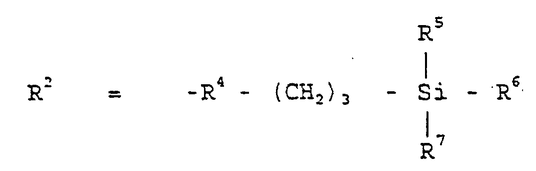 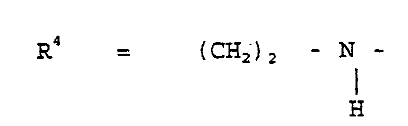
ou 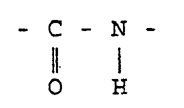
et
R⁵, R⁶, R⁷ pouvant être identiques ou différents, sont
- OCH₃,
- OC₂H₅ ou
- (OC₂H₄)₂OCH₃
ou où un ou deux restes R⁵, R⁶, R⁷ représentent le méthyle et les autres restes ont l'une des significations précédentes ou
b) un polyisocyanate au moins ayant deux groupes NCO libres et étant le produit de la réaction d'un di-, tri- ou polyisocyanate avec des polysiloxanes ayant la formule générale suivante 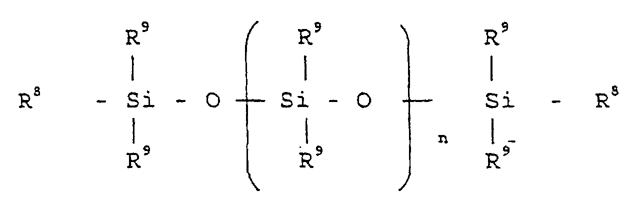
où
les restes R⁹ peuvent être identiques ou différents et peuvent représenter des restes alkyles comportant 1 à 6 atomes de C ou des restes phényles,
les restes R⁸ peuvent être identiques ou différents et représenter
- Alk - OH
- Alk - (OAlk')p OH ou
- 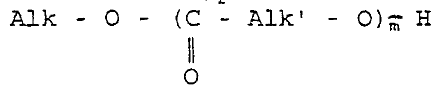
Alk et Alk' étant des groupes alkylènes comportant 1 à 6 atomes de C et plusieurs groupes alkylènes contenus dans une molécule pouvant être identiques ou différents,
n = 8 à 40
m = 2 à 30
p = 1 à 20
C) 0 à 20 % en poids d'une ou plusieurs résines aminoplastes et/ou phénoplastes et
D) 0 à 40 % en poids d'un ou plusieurs polyisocyanates protégés,
la somme des % en poids des composants A), B), C) et D) étant égale à 100 % en poids,
ainsi que de l'eau et éventuellement un ou plusieurs solvants organiques.

2. Composition de liant selon la revendication 1, **caractérisée en ce que** le composé polyol est une résine de poly(méth)acrylate, une résine de polyuréthane, une résine polyéther, une résine polyester ou un polyester oligomère-polyacrylate ayant des hydroxy fonctionnels.

3. Composition de liant selon la revendication 1 ou 2, **caractérisée en ce qu'**elle présente sous une forme aqueuse contenant 0 à 20 % en poids d'un ou plusieurs solvants organiques, rapporté à la composition totale du liant.

4. Composition aqueuse de revêtement contenant la composition de liant selon l'une des revendications 1 à 3, en outre, un ou plusieurs solvants organiques, ainsi qu'éventuellement des pigments et/ou des matières de charge et/ou des additifs usuels pour les vernis.

5. Composition de revêtement selon la revendication 4 comme vernis transparent, vernis de finition, vernis de base ou charge.

6. Procédé pour la réalisation de revêtements dans lequel on applique une composition de revêtement sur un substrat à revêtir, puis on durcit le revêtement obtenu, **caractérisé en ce que** l'on applique une composition de revêtement selon l'une des revendications 4 et 5.

7. Procédé pour la réalisation de revêtements multicouches dans lequel on applique un vernis de base aqueux sur un substrat à revêtir, on applique humide-sur-humide un vernis transparent, éventuellement après une rapide évacuation de l'air, puis on durcit ensemble les couches appliquées, **caractérisé en ce que** l'on utilise, comme vernis de base et/ou comme vernis transparent, des compositions aqueuses de revêtement selon l'une des revendications 4 et 5.

8. Utilisation de la composition aqueuse de liant selon l'une des revendications 1 à 3 pour la réalisation de revêtements.

9. Utilisation de la composition aqueuse de liant selon la revendication 8 pour la réalisation de revêtements multicouches.

10. Utilisation de la composition aqueuse de liant selon l'une des revendications 1 à 3 pour la préparation de compositions de revêtement durcissables à des températures allant de 5 à 180°C.

11. Utilisation de la composition aqueuse de liant selon la revendication 4 ou 5 pour la réalisation de vernis de réparation et de vernis en série pour les véhicules automobiles.

12. Utilisation des liants selon les revendications 1 à 3 pour la préparation d'adhésifs.
